(19) Europäisches Patentamt / European Patent Office / Office européen des brevets

(11) **EP 3 974 228 B1**

(12) **EUROPEAN PATENT SPECIFICATION**

(45) Date of publication and mention
of the grant of the patent:
**29.05.2024 Bulletin 2024/22**

(21) Application number: **21192353.7**

(22) Date of filing: **20.08.2021**

(51) International Patent Classification (IPC):
*B60W 20/16* (2016.01)  *B60W 20/40* (2016.01)
*B60W 20/13* (2016.01)  *B60W 20/11* (2016.01)
*B60W 20/12* (2016.01)  *B60K 6/445* (2007.10)
*B60K 6/46* (2007.10)  *B60W 10/06* (2006.01)
*B60W 10/08* (2006.01)  *B60W 60/00* (2020.01)
*B60W 10/26* (2006.01)  *B60W 40/10* (2012.01)
*B60W 40/105* (2012.01)  *B60W 50/14* (2020.01)
*B60W 50/00* (2006.01)

(52) Cooperative Patent Classification (CPC):
**B60K 6/445; B60K 6/46; B60W 10/06;
B60W 10/08; B60W 10/26; B60W 20/11;
B60W 20/12; B60W 20/13; B60W 20/16;
B60W 20/40; B60W 40/10; B60W 40/1005;
B60W 40/105; B60W 50/0097; B60W 50/14;**

(Cont.)

(54) **VEHICLE DRIVE ROUTE INSTRUCTION SYSTEM**

FAHRZEUGFAHRWEGANLEITUNGSSYSTEM

SYSTÈME D'INSTRUCTION D'ITINÉRAIRE DE CONDUITE DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2020 JP 2020158623**

(43) Date of publication of application:
**30.03.2022 Bulletin 2022/13**

(73) Proprietor: **TOYOTA JIDOSHA KABUSHIKI
KAISHA
Toyota-shi, Aichi-ken, 471-8571 (JP)**

(72) Inventors:
• **YOKOYAMA, Daiki**
  **Aichi-ken 471-8571 (JP)**
• **CHIBA, Hiroya**
  **Aichi-ken 471-8571 (JP)**
• **KAGEURA, Yoshiyuki**
  **Aichi-ken 471-8571 (JP)**
• **SHIMADA, Masanori**
  **Aichi-ken 471-8571 (JP)**
• **SAKAYANAGI, Yoshihiro**
  **Aichi-ken 471-8571 (JP)**

(74) Representative: **D Young & Co LLP
3 Noble Street
London EC2V 7BQ (GB)**

(56) References cited:
US-A- 5 815 824     US-A1- 2003 015 874
US-B2- 8 301 323

EP 3 974 228 B1

(52) Cooperative Patent Classification (CPC): (Cont.)
**B60W 60/00; B60W 60/0011; B60W 60/0023;**
B60W 2050/143; B60W 2050/146; B60W 2420/403;
B60W 2420/408; B60W 2510/244; B60W 2520/10;
B60W 2555/60; B60W 2556/50; B60W 2710/08;
B60W 2710/20; Y02T 10/62

**Description**

FIELD

The present invention relates to a vehicle drive route instruction system.

BACKGROUND

Known in the art has been a hybrid vehicle provided with a power generation use or drive use internal combustion engine, a battery charged by the power generation action of the generator driven by the internal combustion engine or regenerative control, and a battery driven electric motor, wherein when the vehicle passes through the inside of a strengthened air pollution prevention region, the internal combustion engine is made to stop operating and the electric motor is used to drive the vehicle (for example, see Japanese Unexamined Patent Publication No. 7-75210). In this hybrid vehicle, if an amount of charge of the battery falls to a lower limit value, the battery is charged by the power generation action of the generator driven by the internal combustion engine and the lower limit value of the amount of charge of the battery is set high so that the amount of charge of the battery does not become insufficient while the vehicle is passing through the strengthened air pollution prevention region.

US 8301323 B2 makes reference to a navigation system, hybrid vehicle, and method of searching for a route for a hybrid vehicle. When passage through a road pricing area where an exhaust gas emission vehicle is subjected to billing is predicted, ECU acquires a current SOC of a power storage device, and estimates a required energy quantity for passing through the road pricing area where an exhaust gas emission vehicle is subjected to billing by EV traveling. Further, a determination is made whether or not the vehicle can pass through the road pricing area by EV traveling based on the current SOC and the required energy quantity as estimated. When a determination is made that the vehicle cannot pass through the road pricing area by EV traveling, ECU executes steps of guiding a route to an adjacent charging station and/or steps of guiding a bypass.

US 2013/0158870 A1 makes reference to a method and apparatus for vehicle routing, and US005815824A makes reference to a navigation system for electric automobile.

SUMMARY

However, even if the lower limit value of the amount of charge of the battery is set high in this way, for example, if the vehicle continues to be driven inside the strengthened air pollution prevention region, the amount of charge of the battery will fall, that is, the SOC (state of charge) amount showing the amount of charge of the battery will fall while the vehicle is driven through the inside of the strengthened air pollution prevention region and a situation is liable to arise where driving the vehicle by the electric motor will become difficult so long as not driving the internal combustion engine. However, the above Patent Publication does not suggest at all a method for avoiding the occurrence of such a situation. The present invention provides a vehicle drive route instruction system able to avoid the occurrence of such a situation.

According to the present invention, there is provided a vehicle drive route instruction system in a hybrid vehicle driven by only an electric motor or driven by both an electric motor and an internal combustion engine, the vehicle drive route instruction system comprising:

an SOC amount acquiring unit acquiring an SOC amount of a battery which is a source of supply of electric power to the electric motor,
a vehicle position detecting unit detecting a current position of the vehicle,
a zone judging unit judging if currently the vehicle is driving through an inside of an engine drive restriction zone where driving by the internal combustion engine is restricted,
an operation control unit making the internal combustion engine stop operating and making the electric motor drive the vehicle when it is judged that currently the vehicle is driving through the engine drive restriction zone,
a shortest route searching unit searching for a shortest route from the current position to a boundary of an inside of the engine drive restriction zone and an outside of the engine drive restriction zone when it is judged that currently the vehicle is driving through the inside of the engine drive restriction zone,
a decreased SOC amount calculating unit calculating a decreased SOC amount when driving the vehicle through the searched shortest route from the current position to the boundary,
an SOC amount judging unit judging if the SOC amount will fall to a preset judgment standard based on the current SOC amount and the calculated decreased SOC amount when driving the vehicle through the searched shortest route from the current position to the boundary based, and
a guidance device giving information to an occupant of the vehicle to guide the vehicle from the current position through the searched shortest route to the boundary in case where it is judged that the SOC amount will fall to the judgment standard when driving the vehicle through the searched shortest route from the current position to the boundary.

Further, according to an example not falling within the subject-matter for which protection is sought, there is provided a vehicle drive route instruction system in a hybrid vehicle driven by only an electric motor or driven by both an electric motor and an internal combustion engine, the vehicle drive route instruction system comprising:

an SOC amount acquiring unit acquiring an SOC amount of a battery which is a source of supply of electric power to the electric motor,

a vehicle position detecting unit detecting a current position of the vehicle,

a zone judging unit judging if currently the vehicle is driving through an inside of an engine drive restriction zone where driving by the internal combustion engine is restricted,

an operation control unit making the internal combustion engine stop operating and making the electric motor drive the vehicle when it is judged that currently the vehicle is driving through the engine drive restriction zone,

a shortest route searching unit searching for a shortest route from the current position to a boundary of an inside of the engine drive restriction zone and an outside of the engine drive restriction zone when it is judged that currently the vehicle is driving through the inside of the engine drive restriction zone,

a decreased SOC amount calculating unit calculating a decreased SOC amount when driving the vehicle through the searched shortest route from the current position to the boundary,

an SOC amount judging unit judging if the SOC amount will fall to a preset judgment standard based on the current SOC amount and the calculated decreased SOC amount when driving the vehicle through the searched shortest route from the current position to the boundary based, and

a self driving device autonomously driving the vehicle through the searched shortest route from the current position to the boundary in case where it is judged that the SOC amount will fall to the judgment standard when driving the vehicle through the searched shortest route from the current position to the boundary.

In the invention, it is possible to guide the vehicle so that the vehicle does not become unable to be driven inside the engine drive restriction zone, while in the example not falling within the subject-matter for which protection is sought, the vehicle operation is controlled so that the vehicle does not become unable to be driven inside the engine drive restriction zone.

BRIEF DESCRIPTION OF DRAWINGS

FIG. 1 is an overall view of a vehicle schematically shown.
FIG. 2A and FIG. 2B are views of the configuration of a vehicle drive unit.
FIG. 3 is a view for explaining an SOC amount.
FIG. 4 is a flow chart for charging control.
FIG. 5 is a view schematically showing a road map.
FIG. 6 is a view showing the SOC amount.
FIG. 7 is a view showing a vehicle and server shown schematically.
FIG. 8 is a view of the functional configuration of a vehicle drive route instruction system according to the present invention.
FIG. 9 is a flow chart for vehicle control.
FIG. 10 is a view of the functional configuration of another embodiment of the vehicle drive route instruction system according to the present invention.
FIG. 11 is a flow chart for self driving control.
FIG. 12 is a flow chart for self driving control.

DESCRIPTION OF EMBODIMENTS

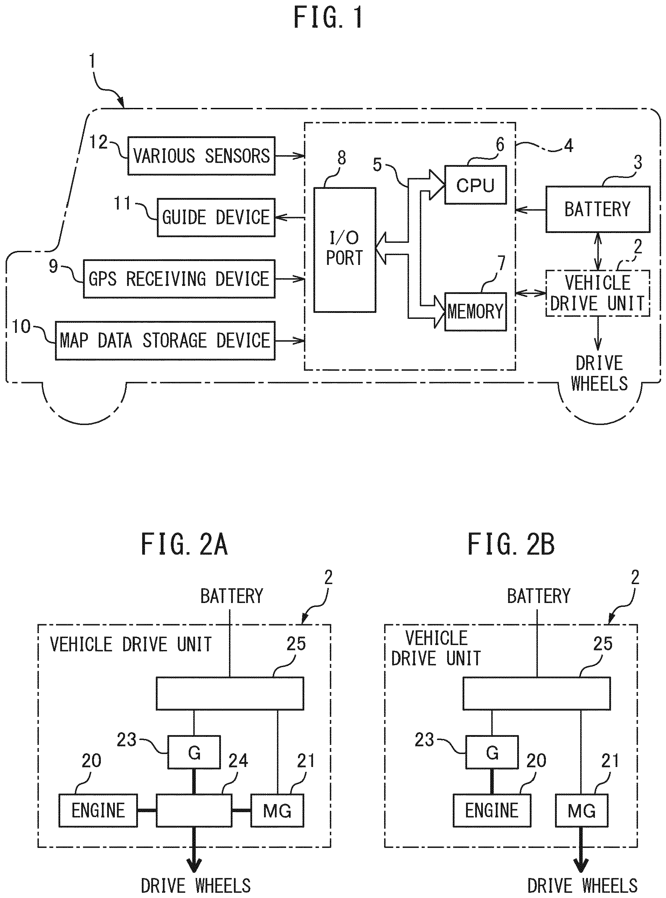

Referring to FIG. 1, 1 shows a hybrid vehicle driven by only an electric motor or driven by both an electric motor and an internal combustion engine. Further, in FIG. 1, 2 indicates a vehicle drive unit for providing drive force to the drive wheels, 3 indicates a battery, and 4 indicates an electronic control unit mounted in the vehicle 1. As shown in FIG. 1, the electronic control unit 4 is comprised of a digital computer provided with a CPU (microprocessor) 6, a memory 7 comprised of a ROM and RAM, and an input/output port 8, which are connected to each other via a bidirectional bus 5.

Further, inside the vehicle 1, a GPS (global positioning system) receiving device 9 for receiving signals from satellites to detect the current position of the vehicle 1, a map database storage device 10 storing a map database etc., and a guidance device 11 comprised of a navigation system for guiding the vehicle 1 to a destination are mounted. Furthermore, inside the vehicle 1, an accelerator opening degree sensor, engine rotational speed sensor, vehicle speed sensor, atmospheric temperature sensor, atmospheric pressure sensor, or other various sensors 12 are mounted. These GPS receiving device 9, map database storage device 10, guidance device 11, and various sensors 12 are connected to the electronic control unit 4.

FIG. 2A and FIG. 2B are views of the configuration of the vehicle drive unit 2 shown in FIG. 1, showing typical hybrid systems of respectively different formats. These hybrid systems are well known, so will be explained extremely simply. First, referring to FIG. 2A, the vehicle drive unit 2 is provided with an internal combustion engine 20, an electric motor 21, a generator 23, a power distribution mechanism 24 comprised of for example a planetary gear mechanism, and a motor control device 25. The electric motor 21 performs the role of a generator, so is usually called a "motor-generator". For example, at the time of low speed driving, the vehicle 1 is driven by the electric motor 21. At this time, electric power is supplied from the battery 3 through the motor control device 25 to the electric motor 21 while the output of the electric motor 21 is transmitted by the power distribution mechanism 24 to the drive wheels.

On the other hand, at the time of medium or high speed driving, the vehicle 1 is driven by the internal combustion engine 20 and electric motor 21. At this time, on the one hand, part of the output of the internal combustion engine 20 is transmitted by the power distribution mechanism 24 to the drive wheels, while on the other hand, part of the output of the internal combustion engine 20 is used to drive the generator 23, the generated electric power of the generator 23 is used to drive the electric motor 21, and the output of the electric motor 21 is transmitted by the power distribution mechanism 24 to the drive wheels. Further, at the time of braking the vehicle 1, the electric motor 21 functions as a generator, and a regenerative control in which the battery 3 is charged by the generated electric power of the electric motor 21 is performed. Further, if the amount of charge of the battery 3 falls, the generator 23 is driven through the power distribution mechanism 24 by the internal combustion engine 20, and the battery 3 is charged by the generated electric power of the generator 23.

Next, referring to FIG. 2B, the vehicle drive unit 2 is provided with the internal combustion engine 20, electric motor 21, generator 23, and motor control device 25. In the hybrid system shown in FIG. 2B, the electric motor 21 performs the role of a generator, so usually is called a "motor-generator". In this hybrid system, the vehicle 1 is constantly driven by the electric motor 21. On the other hand, if the amount of charge of battery 3 falls, the generator 23 is driven by the internal combustion engine 20, and the battery 3 is charged by the generated electric power of the generator 23. Further, in this hybrid system as well, at the time of braking the vehicle 1, the electric motor 21 functions as a generator, and a regenerative control in which the battery 3 is charged by the generated electric power of the electric motor 21 is performed. In the hybrid system shown in either of FIG. 2A and FIG. 2B as well, the internal combustion engine 20 and the power distribution mechanism 24 are controlled by the output signal of the electronic control unit 4 while the electric motor 21 and generator 23 are controlled by the motor control device 25 based on the output signals of the electronic control unit 4.

In this regard, if referring to the mode where the vehicle 1 is driven by only the electric motor 21 as the EV mode and referring to the mode where the vehicle 1 is driven by both of the internal combustion engine 20 and electric motor 21 as the HV mode, in the hybrid vehicle 1 provided with the hybrid system shown in FIG. 2A, the mode is selectively switched to either of the EV mode and the HV mode. On the other hand, in the hybrid vehicle 1 provided with a hybrid system shown in FIG. 2B, the vehicle 1 is driven by only the electric motor 21, and the internal combustion engine 20 is used only for driving the generator 23 and charging the battery 3, so in this vehicle 1, the drive mode of the vehicle 1 is always made the EV mode. Note that, the hybrid system shown in FIG. 2A and FIG. 2B is a typical example. In the present invention, various types of hybrid systems can be used. Note that, below, the present invention will be explained centered about the case of using the hybrid system shown in FIG. 2A.

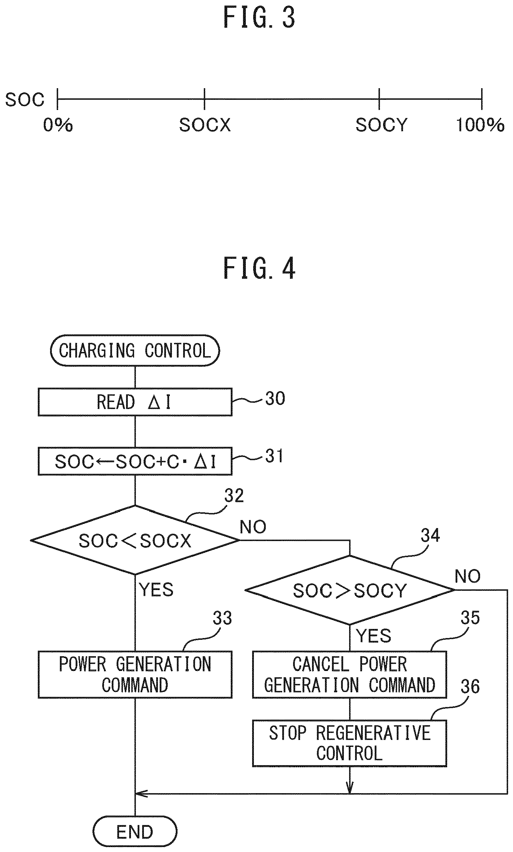

FIG. 3 shows the SOC (state of charge) amount expressing the amount of charge of the battery 3. In FIG. 3, when the amount of charge of the battery 3 is a full charge, the SOC amount becomes 100% while when the amount of charge of the battery 3 is zero, the SOC amount becomes 0%. Further, in the hybrid system shown in FIG. 2A and FIG. 2B, for example, if the amount of charge falls to a preset lower limit value SOCX, the generator 23 is driven by the internal combustion engine 20 until the amount of charge rises to a preset upper limit value SOCY, and a charging action of the battery 3 is performed by the generated electric power of the generator 23. Note that, below, the SOC amount will sometimes be simply expressed by "SOC". Note that, the amounts of current outflow from and inflow to the battery 3 and the output voltage of the battery 3 are constantly detected, and the SOC amount is calculated based on the detected amounts of current outflow from and inflow to the battery 3 etc. in the electronic control unit 4.

FIG. 4 shows the charging control routine of a battery 3 performed by the electronic control unit 4. This charging control routine is executed by interruption every fixed time period.

Referring to FIG. 4, first, at step 30, the amount of inflow of current ΔI to the battery 3 in a fixed time period is read. Next, at step 31, the product of the amount of inflow of current ΔI to the battery 3 in a fixed time period and a constant C is added to the SOC amount SOC. Note that, when current flows out from the battery 3, the amount of inflow of current ΔI becomes a minus value. Note that, the method of calculation of the SOC amount SOC is only shown by an extremely simple example. Various known methods of calculation of the SOC amount SOC can be used.

Next, at step 32, it is judged if the SOC amount SOC falls below the preset lower limit value SOCX. When it is judged that the SOC amount SOC falls below the preset lower limit value SOCX, the routine proceeds to step 33 where a power generation command is issued. If the power generation command is issued, the generator 23 is driven by the internal combustion engine 20 and the action of charging the battery 3 is performed by the generated electric power of the generator 23. On the other hand, when it is judged at step 32 that the SOC amount SOC does not fall below the preset lower limit value SOCX, the routine proceeds to step 34 where it is judged if the SOC amount SOC exceeds the preset upper limit value SOCY. When it is judged that the SOC amount SOC exceeds the preset upper limit value SOCY, the routine proceeds to step 35 where the power generation command is cancelled. If the power generation command is cancelled, drive of the generator 23 by the internal combustion engine 20 is stopped and the action of charging the battery 3 by the generator 23 is stopped. Next, at step 36, regenerative control is stopped.

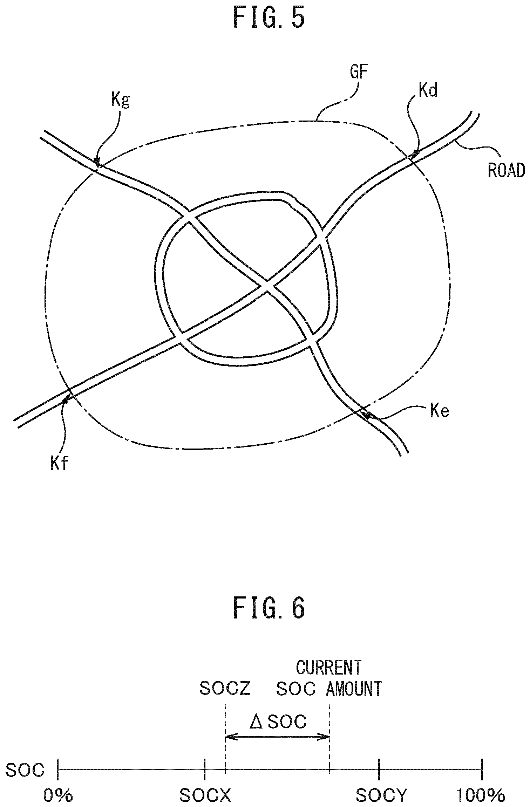

Now then, in recent years, from the viewpoint of prevention of air pollution, from the viewpoint of noise prevention, or from other viewpoints, an increasing number of countries have been establishing engine drive restriction zones restricting driving by internal combustion engines and drafting regulations prohibiting driving by internal combustion engines in such engine drive restriction zones. FIG. 5 schematically shows a boundary GF between an inside of an engine drive restriction zone and an outside of the engine drive restriction zone, which is set in a certain region. The inside of this boundary GF is made the engine drive restriction zone. This boundary GF is usually called "geofencing". This boundary GF is sometimes fixed and sometime fluctuates in position due to the state of air pollution or some other reason.

In FIG. 5, Kd, Ke, Kf, and Kg show positions of the roads on the boundary GF. The road positions Kd, Ke, Kf, and Kg positioned on the boundary GF are sometimes provided with gates. In this case, the occupant of the vehicle 1 can recognize he or she has entered an engine drive restriction zone by the vehicle 1 passing through these gates. Further, at this time, if an apparatus installed at the gate emits a signal showing that the vehicle 1 has entered inside the engine drive restriction zone, it is possible to recognize that the vehicle 1 has entered the inside of the engine drive restriction zone by receiving this signal. Further, if electronic boundary position data showing the position of this boundary GF can be acquired, for example, it is possible to recognize that the vehicle 1 has entered the inside of the engine drive restriction zone by displaying the boundary position on the map screen based on this boundary position data.

In this regard, when the vehicle 1 enters inside the engine drive restriction zone, driving by the internal combustion engine 20 is prohibited, so the internal combustion engine 20 must be made to stop operating and the electric motor 21 must be used to drive the vehicle 1. In this regard, if using the electric motor 21 to drive the vehicle 1, if the SOC amount SOC falls below the preset lower limit value SOCX while the vehicle 1 is driving through the inside of the engine drive restriction zone, the internal combustion engine 20 has to be used to drive the generator 23 to charge the battery 3 by the electric power generated by the generator 23. However, inside the engine drive restriction zone, driving by the internal combustion engine 20 is prohibited, so it is not possible to drive the internal combustion engine 20 and as a result there is the problem that it is no longer possible to drive the vehicle 1.

Therefore, in the first embodiment according to the present invention, to keep such a problem from arising, when it is judged that the vehicle 1 is driving through the inside of the engine drive restriction zone, the shortest route from the current position to the boundary GF continues to be searched, and the decreased SOC amount when driving the vehicle through the searched shortest route from the current position to the boundary GF continues to be calculated, it continues to be judged from the current SOC and the calculated decreased SOC amount whether the vehicle 1 can reach the boundary GF before the SOC amount falls below the preset lower limit value SOCX when driving the vehicle 1 through the searched shortest route from the current position toward the boundary GF, that is, whether the SOC amount will fall to a preset judgment standard slightly larger than the preset lower limit value SOCX when driving the vehicle 1 through the searched shortest route from the current position to the boundary GF, and when it is judged that the SOC amount will fall to the judgment standard when driving the vehicle 1 through the searched shortest route from the current position to the boundary GF, the occupant of the vehicle 1 is given information and the vehicle 1 is guided from the current position through the searched shortest route to the boundary GF.

FIG. 6 shows the relationship among the current SOC amount, the decreased SOC amount ΔSOC, and the judgment standard SOCZ when it is judged that the SOC amount will fall to the judgment standard when driving the vehicle 1 through the searched shortest route from the current position to the boundary GF. Note that, FIG. 6 shows the SOC amount similar to FIG. 3, and accordingly, as explained referring to FIG. 3, if the SOC amount falls to the preset lower limit value SOCX, the generator 23 is driven by the internal combustion engine 20 until the SOC rises to the preset upper limit value SOCY.

Now then, the SOC amount when the vehicle 1 reaches boundary GF is the value of the current SOC minus the decreased SOC amount ΔSOC (current SOC-ΔSOC). Therefore, in the first embodiment according to the present invention, when the SOC amount when the vehicle 1 reaches the boundary GF (current SOC-ΔSOC) becomes the judgment standard SOCZ such as shown in FIG. 6, the occupant of the vehicle 1 is given information and the vehicle 1 is guided from the current position through the searched shortest route to the boundary GF. In this case, in the first embodiment according to the present invention, the decreased SOC amount ΔSOC is found by calculation considering the road conditions of the shortest route from the current position to the boundary GF.

In this regard, if the vehicle 1 reaches the boundary GF and is positioned outside of the engine drive restriction zone, the internal combustion engine 20 can be used to drive the generator 23, so it is also possible to use the preset lower limit value SOCX as the judgment standard SOCZ. However, as an actual problem, it is difficult to accurately calculate the decreased SOC amount ΔSOC. Therefore, in the first embodiment according to the present invention, the value of the preset lower limit value SOCX plus a fixed value is made the judgment standard SOCZ so that the judgment standard SOCZ does not become below the preset lower limit value SOCX even if the calculated value of the decreased SOC amount ΔSOC deviates somewhat from the actual decreased SOC amount. In this case, in the first embodiment according to the present invention, this fixed value is made a predetermined percentage of 10% or less. Therefore, in FIG. 3, the judgment standard SOCZ is made the value of the preset lower limit value SOCX plus a predetermined percentage of 10% or less.

On the other hand, as will be understood from FIG. 6, the SOC amount (current SOC-ΔSOC) when the vehicle 1 reaches the boundary GF becoming the judgment standard SOCZ means that the current SOC becomes the value (SOCZ+ΔSOC) of the judgment standard SOCZ plus the decreased SOC amount ΔSOC. Therefore, in the first embodiment according to the present invention, by judging whether the current SOC becomes lower than the value (SOCZ+ΔSOC) of the judgment standard SOCZ plus the decreased SOC amount ΔSOC, it is judged whether the SOC amount will fall to the preset judgment standard SOCZ when driving the vehicle 1 through the searched shortest route from the current position to the boundary GF. When it is judged that the current SOC falls below the value (SOCZ+ΔSOC) of the judgment standard plus the calculated decreased SOC, the occupant of the vehicle 1 is given information to guide the vehicle 1 from the current position through the searched shortest route to the boundary GF.

On the other hand, as explained above, the guidance device 11 is comprised of a navigation system. When it is judged that the SOC amount will fall to the preset judgment standard SOCZ when driving the vehicle 1 through the searched shortest route from the current position to the boundary GF, the guidance device 11 imparts information to the occupant of the vehicle 1 to guide the vehicle 1 from the current position through the searched shortest route to the boundary GF. In this case, as one example, the guidance device 11 is provided with a display unit displaying the driving route of the vehicle 1, that is, a display screen of the navigation system. When it is judged that the SOC amount will fall to the preset judgment standard SOCZ when driving the vehicle 1 through the searched shortest route from the current position to the boundary GF, this display unit, that is, the display screen of the navigation system, is made to display the searched shortest route and to display the fact that the vehicle 1 should head toward the outside of the engine drive restriction zone since it is liable to become unable to be driven.

Further, in another example, the guidance device 11 is provided with a speech generating unit explaining the driving route of the vehicle by voice. When it is judged that the SOC amount will fall to the preset judgment standard SOCZ when driving the vehicle through the searched shortest route from the current position to the boundary GF, the vehicle 1 is liable to become unable to be driven, so a warning is issued by voice to the effect that the vehicle should head to outside of the engine drive restriction zone and the searched shortest route is guided along by voice.

Next, one example of the method of calculation of the decreased SOC amount ΔSOC will be explained. The energy EX consumed through the searched shortest route from the current position to the boundary GF, as shown by the following formula, becomes the sum of the loss Ef due to friction from the current position until reaching the boundary GF, the amount of change ΔEh of the potential energy, and the amount of change ΔEv of the kinetic energy:

$$EX = Ef + \Delta Eh + \Delta Ev$$

Now then, the loss Ef due to friction becomes the integral value of the loss "f" due to friction at any instant from the current position until reaching the boundary GF. Here, if "v" is the vehicle speed, the loss "f" due to friction at any instant is expressed by a quadratic expression of the vehicle speed "v" as in the following formula:

$$f = av^2 + bv + c \text{ (a, b, c are constants)}$$

On the other hand, the amount of change ΔEh of the potential energy becomes as in the following formula by the difference in altitude Δh between the current position and the reached position:

$$\Delta Eh = mg\Delta h \text{ ("m" is the mass of the vehicle 1, while "g" is the gravitational acceleration)}$$

Further, the amount of change ΔEv of the kinetic energy becomes as in the following formula when designating the current vehicle speed as v0 and the vehicle speed when reaching the designation as "v":

$$\Delta Eh = 1/2 \cdot m \ (v^2 - v0^2)$$

On the other hand, if approximating the conversion efficiency when the output of the battery 3 is converted to mechanical output by the constant μ, the energy ΔEb taken out from the battery 3 until reaching the boundary GF from the current position becomes as in the following formula:

$$\Delta Eb = EX/\mu$$

On the other hand, if the charge capacity of the battery 3 is designated as Q and the output voltage of the battery 3 is approximated by the constant V, the energy Eq held by the battery 3 becomes as in the following formula:

$$Eq = QV$$

Therefore, the decreased SOC amount ΔSOC is expressed by the following formula:

$$\Delta SOC = \Delta Eb/Eq$$

In this way, the decreased SOC amount ΔSOC is calculated. Note that, in calculating the decreased SOC amount ΔSOC, the difference in altitude Δh is calculated based on the map database stored in the map database storage device 10 and the vehicle speed "v" is made the legal speed on the searched shortest route.

Note that, strictly speaking, the conversion efficiency, that is, the constant μ, depends on the drive output and the vehicle speed "v" of the vehicle 1, so ΔEb becomes a function of the drive output and the vehicle speed "v" of the vehicle 1, and the output voltage V of the battery 3 depends on the SOC amount, so Eq becomes a function of the SOC amount. Therefore, when strictly finding the decreased SOC amount ΔSOC, the decreased SOC amount ΔSOC is calculated considering the changes in the drive output, the vehicle speed "v", and the SOC of the vehicle 1. Note that, the explanation of the method of calculation of the decreased SOC amount ΔSOC when strictly finding the decreased SOC amount will be omitted here.

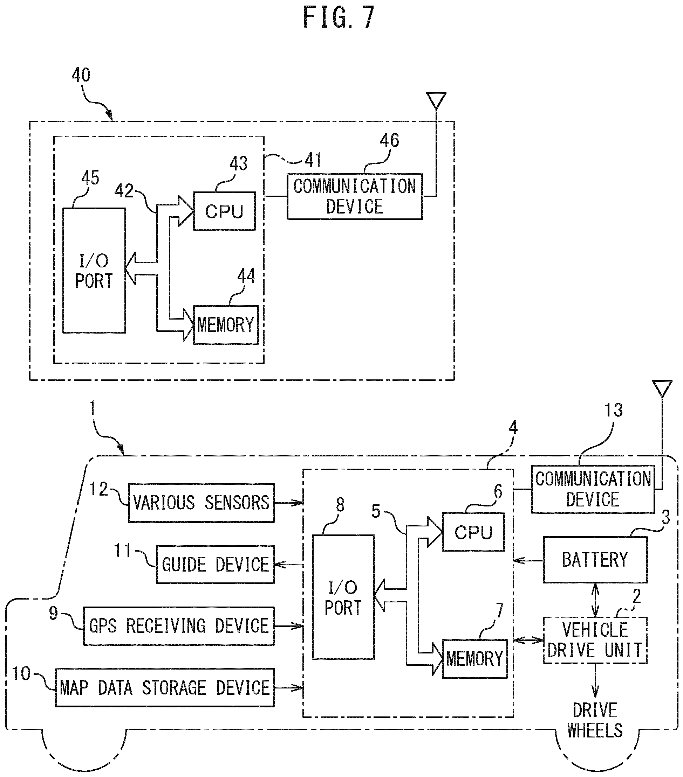

FIG. 7 shows the case where in addition to the vehicle 1, a server 40 is set outside of the vehicle 1 and where the vehicle 1 and the server 40 communicate. Referring to FIG. 7, in the same way as the vehicle 1 shown in FIG. 1, in the vehicle 1, the vehicle drive unit 2, battery 3, electronic control unit 4, GPS receiving device 9, map database storage device 10, guidance device 11 comprised of a navigation system, and various sensors 12 are mounted. Further, in the vehicle 1, a communication device 13 for communicating with the server 40 is mounted.

On the other hand, inside the server 40, an electronic control unit 41 is set. This electronic control unit 41 is comprised of a digital computer provided with a CPU (microprocessor) 43, a memory 44 comprised of a ROM and RAM, and an input/output port 45, which are connected to each other via a bidirectional bus 42. Further, inside the server 40, a communication device 46 for communicating with the vehicle 1 is set. In the example shown in FIG. 7, information relating to the boundary GF of the inside of the engine drive restriction zone and the outside of the engine drive restriction zone, that is, information relating to the geofencing, is stored in the memory 44 of the server 40. The information relating to the boundary GF, that is, the geofencing, is transmitted from the server 40 to the vehicle 1.

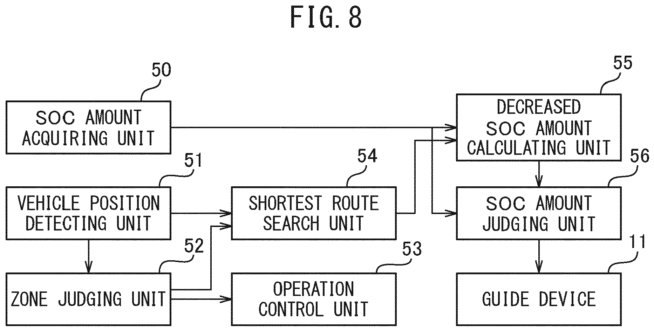

FIG. 8 is a view of the functional configuration of the first embodiment according to the present invention. If referring to FIG. 8, in this first embodiment according to the present invention, in the hybrid vehicle 1 driven by only the electric motor 21 or driven by both of the electric motor 21 and the internal combustion engine 20, there are provided in the electronic control unit 4 an SOC amount acquiring unit 50 acquiring an SOC amount of the battery 3 which is a source of supply of electric power to the electric motor 21, a vehicle position detecting unit 51 detecting the current position of the vehicle 1, a zone judging unit 52 judging if currently the vehicle 1 is driving through the inside of the engine drive restriction zone where driving by the internal combustion engine 20 is restricted, an operation control unit 53 making the internal combustion engine 20 stop operating and making the electric motor 21 drive the vehicle 1 when it is judged that currently the vehicle 1 is driving through the engine drive restriction zone, a shortest route searching unit 54 searching for a shortest route from the current position to the boundary of the inside of the engine drive restriction zone and the outside of the engine drive restriction zone when it is judged that currently the vehicle 1 is driving through the inside of the engine drive restriction zone, a decreased SOC amount calculating unit 55 calculating the decreased SOC amount when driving the vehicle 1 through the searched shortest route from the current position to the boundary GF, and an SOC amount judging unit 56 judging if the SOC amount will fall to the preset judgment standard SOCZ when driving the vehicle 1 through the searched shortest route from the current position to the boundary GF based on the current SOC amount and the calculated decreased SOC amount. Further, inside the vehicle 1, the guidance device 11 is mounted for providing information to an occupant of the vehicle 1 to guide the vehicle 1 from the current position through the searched shortest route to the boundary GF in case where it is judged that the SOC amount will fall to the judgment standard SOCZ when driving the vehicle 1 through the searched shortest route from the current position to the boundary GF.

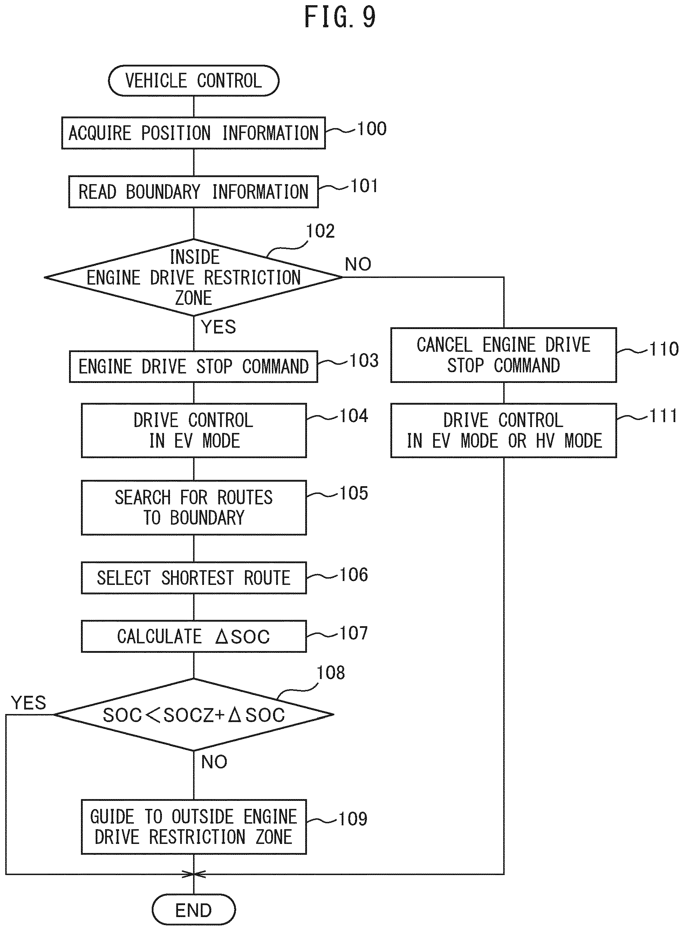

FIG. 9 shows a vehicle control routine performed in the CPU 6 of the electronic control unit 4 mounted in the vehicle 1 for working the first embodiment according to the present invention. This routine is performed by interruption every fixed time period.

Referring to FIG. 9, first, at step 100, the current position of the vehicle 1 is acquired based on received signals received from the GPS receiving device 9 and the map database stored in the map database storage device 10. Next, at step 101, the road positions Kd, Ke, Kf, Kg, etc. positioned on the boundary GF between the inside of the engine drive restriction zone and the outside of the engine drive restriction zone and other information relating to the boundary GF is read. In this case, in the example shown in FIG. 1, the information relating to this boundary GF is stored in the map database storage device 10. Therefore, in the example shown in FIG. 1, at step 101, the information relating to the boundary GF stored in the map database storage device 10 is read. On the other hand, in the example shown in FIG. 7, the information relating to the boundary GF is stored in the server 40. Therefore, in the example shown in FIG. 7, information relating to the boundary GF transmitted from the server 40 to the vehicle 1 is read in at step 101.

Next, at step 102, it is judged if currently the vehicle 1 is driving through the inside of the engine drive restriction zone where driving by the internal combustion engine 20 is restricted based on the acquired current position of the vehicle 1 and information relating to the boundary GF. When it is judged that currently the vehicle 1 is driving through the inside of an engine drive restriction zone, the routine proceeds to step 103 where a command for stopping driving by the internal combustion engine 20 is issued. If the command for stopping driving by the internal combustion engine 20 is issued, the routine proceeds to step 104 where operational control where the internal combustion engine 20 is made to stop operating and the electric motor 21 is used to drive the vehicle 1 is continued until the command for stopping driving by the internal combustion engine 20 is cancelled. That is, at this time, operational control is performed in the EV mode where the vehicle 1 is driven by only the electric motor 21.

Next, at step 105, the routes from the current position to the boundary GF are searched through. The search operation of these routes is performed by the navigation system. Next, at step 106, the shortest route from the current position to the boundary GF is selected from these routes. That is, at step 105 and step 106, the shortest route from the current position to the boundary GF is searched. If the shortest route from the current position to the boundary GF is searched, the routine proceeds to step 107 where the decreased SOC amount ΔSOC is calculated by using the above-mentioned method of calculation. Next, at step 108, the current SOC amount SOC calculated in the charging control routine of the battery 3 shown in the FIG. 4 is read and it is judged if the current SOC amount SOC is less than the value (SOCZ+ΔSOC) of the judgment standard SOCZ plus the calculated decreased SOC amount ΔSOC.

When it is judged that the current SOC amount SOC is not less than the value (SOCZ+ΔSOC) of the judgment standard SOCZ plus the calculated decreased SOC amount ΔSOC, that is, when there is an extra margin of the SOC amount SOC when driving the vehicle 1 from the current position to the boundary GF from the judgment standard SOCZ, the processing cycle is ended. As opposed to this, when it is judged that the current SOC amount SOC is less than the value (SOCZ+ΔSOC) of the judgment standard SOCZ plus the calculated decreased SOC amount ΔSOC, the routine proceeds to step 109 where guidance processing is performed to use the guidance device 11 to provide information to the occupant of the vehicle 1 by an image or voice and guide the vehicle 1 from the current position through the searched shortest route to the boundary GF. Next, the processing cycle is ended.

On the other hand, if at step 102 it is judged that currently the vehicle 1 is not driving through the inside of the engine drive restriction zone, the routine proceeds to step 110 where the command for stopping driving by the internal combustion engine 20 is cancelled. If the command for stopping driving by the internal combustion engine 20 is cancelled, driving by the internal combustion engine 20 becomes possible. Next, at step 111, drive control is performed in accordance with the drive state of the vehicle 1 by either mode of the EV mode where the vehicle 1 is driven by only the electric motor 21 and the HV mode where the vehicle 1 is driven by both of the internal combustion engine 20 and electric motor 21. Note that, at this time, the internal combustion engine 20 can be used to drive the generator 23 to charge the battery 3.

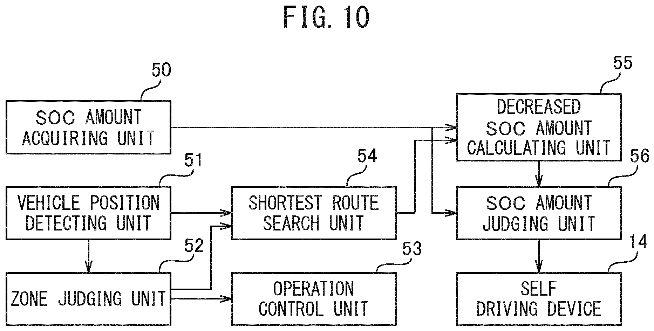

FIG. 10 to FIG. 12 show an example not falling within the subject matter for which protection is sought, where the vehicle drive route instruction system is applied to a self driving hybrid vehicle provided with a self driving device. In this example, a self driving device is mounted in the vehicle 1 shown in FIG. 1 and FIG. 7. As the various sensors 12, a forward capture camera, side capture cameras, rear capture camera, radar, LIDAR, etc. required for self driving are mounted. Also, a steering control device is mounted.

In this example as well, in the same way as the first embodiment, it continues to be judged if the SOC amount will fall to the judgment standard SOCZ shown in FIG. 6 when driving the vehicle 1 through the searched shortest route from the current position to the boundary GF. On the other hand, when it is judged that the SOC amount will fall to the judgment standard SOCZ, in this example, unlike the first embodiment, the vehicle 1 is autonomously driven by the self driving device from the current position through the searched shortest route to the boundary GF.

FIG. 10 is a view of the functional configuration of this example. If referring to FIG. 10, in this example as well, in the same way as the first embodiment, in the hybrid vehicle 1 driven by only the electric motor 21 or driven by both of the electric motor 21 and the internal combustion engine 20, there are provided in the electronic control unit 4 an SOC amount acquiring unit 50 acquiring an SOC amount of the battery 3 which is a source of supply of electric power to the electric motor 21, a vehicle position detecting unit 51 detecting the current position of the vehicle 1, a zone judging unit 52 judging if currently the vehicle 1 is driving through the inside of the engine drive restriction zone where driving by the internal combustion engine 20 is restricted, an operation control unit 53 making the internal combustion engine 20 stop operating and making the electric motor 21 drive the vehicle 1 when it is judged that currently the vehicle 1 is driving through the engine drive restriction zone, a shortest route searching unit 54 searching for a shortest route from the current position to the boundary of the inside of the engine drive restriction zone and the outside of the engine drive restriction zone when it is judged that currently the vehicle 1 is driving through the inside of the engine drive restriction zone, a decreased SOC amount calculating unit 55 calculating the decreased SOC amount when driving the vehicle 1 through the searched shortest route from the current position to the boundary GF, and an SOC amount judging unit 56 judging if the SOC amount will fall to the preset judgment standard SOCZ when driving the vehicle 1 through the searched shortest route from the current position to the boundary GF based on the current SOC amount and the calculated decreased SOC amount.

On the other hand, in this example, unlike the first embodiment, inside the vehicle 1, a self driving device 14 is mounted for autonomously driving the vehicle 1 from the current position through the searched shortest route to the boundary GF in case where it is judged that the SOC amount will fall to the preset judgment standard SOCZ when driving the vehicle through the searched shortest route from the current position to the boundary GF. This self driving device 14 is controlled by the electronic control unit 4.

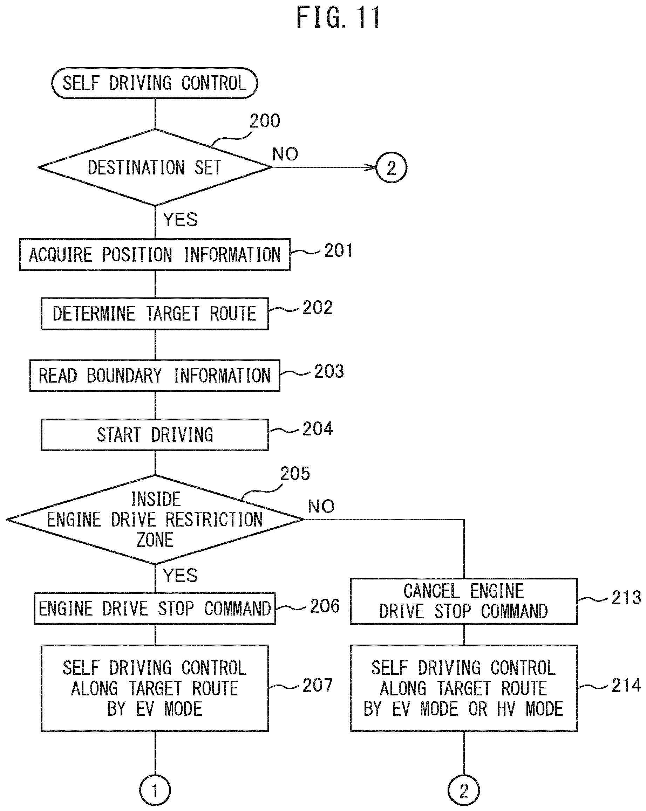

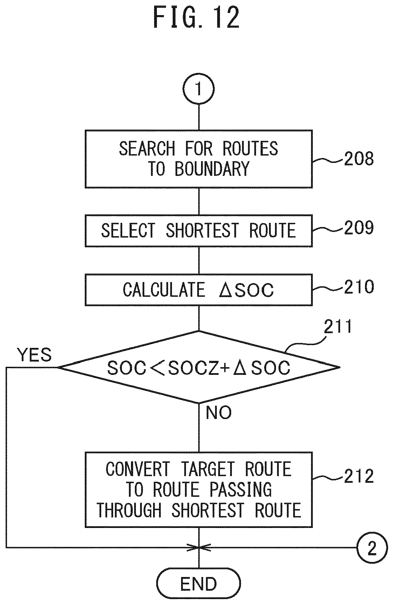

FIG. 11 and FIG. 12 show a self driving control routine performed in the CPU 6 of the electronic control unit 4 mounted in the vehicle 1 for working this example. This routine is performed by interruption every fixed time period.

Referring to FIG. 11, first, at step 200, for example, it is judged if an occupant has set a destination on the operating screen of the self driving device 14. When it is judged that a destination has not been set, the processing cycle is ended. As opposed to this, when it is judged that a destination has been set, the routine proceeds to step 201 where the current position of the vehicle 1 is acquired based on received signals received from the GPS receiving device 9 and the map database stored in the map database storage device 10. Next, at step 202, the target route is determined by the navigation system. Next, at step 203, information relating to the boundary GF stored in the map database storage device 10 or the information relating to the boundary GF transmitted from the server 40 to the vehicle 1 are read.

Next, at step 204, the vehicle 1 starts to be driven by self driving. If the vehicle 1 starts to be driven, the routine proceeds to step 205 where it is judged if currently the vehicle 1 is driving through the inside of the engine drive restriction zone where driving by the internal combustion engine 20 is restricted based on the acquired current position of the vehicle 1 and information relating to the boundary GF. When it is judged that currently the vehicle 1 is driving through the inside of the engine drive restriction zone, the routine proceeds to step 206 where a command for stopping driving by the internal combustion engine 20 is issued. If the command for stopping driving by the internal combustion engine 20 is issued, the routine proceeds to step 207 where the self driving control where the internal combustion engine 20 is made to stop operating and the electric motor 21 is used to drive the vehicle 1 is continued until the command for stopping driving by the internal combustion engine 20 is cancelled. That is, at this time, self driving control is performed in the EV mode where the vehicle 1 is driven by only the electric motor 21.

Next, at step 208, the routes from the current position to the boundary GF are searched through. The search operation of these routes is performed by the navigation system. Next, at step 209, the shortest route from the current position to the boundary GF is selected from these routes. That is, at step 208 and step 209, the shortest route from the current position to the boundary GF is searched. If the shortest route from the current position to the boundary GF is searched, the routine proceeds to step 210 where the decreased SOC amount ΔSOC is calculated by using the above-mentioned method of calculation. Next, at step 211, the current SOC amount SOC calculated in the charging control routine of the battery 3 shown in the FIG. 4 is read and it is judged if the current SOC amount SOC is less than the value (SOCZ+ΔSOC) of the judgment standard SOCZ plus the calculated decreased SOC amount ΔSOC.

When it is judged that the current SOC amount SOC is not less than the value (SOCZ+ΔSOC) of the judgment standard SOCZ plus the calculated decreased SOC amount ΔSOC, that is, when there is an extra margin of the SOC amount SOC when driving the vehicle 1 from the current position to the boundary GF from the judgment standard SOCZ, the processing cycle is ended. As opposed to this, when it is judged that the current SOC amount SOC is less than the value (SOCZ+ΔSOC) of the judgment standard SOCZ plus the calculated decreased SOC amount ΔSOC, the routine proceeds to step 212 where the target route is changed to the searched shortest route and self driving control is performed for autonomously driving the vehicle 1 from the current position through the searched shortest route to the boundary GF. Next, the processing cycle is ended.

On the other hand, when at step 205 it is judged that currently the vehicle 1 is not driven through the inside of the engine drive restriction zone, the routine proceeds to step 213 where the command stopping the drive operation by the internal combustion engine 20 is cancelled. If the command stopping the drive operation by the internal combustion engine 20 is cancelled, the drive operation by the internal combustion engine 20 becomes possible. Next, at step 214, in accordance with the operating state of the vehicle 1, self driving is controlled by either of the modes of an EV mode where the vehicle 1 is driven by only the electric motor 21 and an HV mode where the vehicle 1 is driven by both of the internal combustion engine 20 and the electric motor 21.

**Claims**

1. A vehicle drive route instruction system in a hybrid vehicle (1) driven by only an electric motor (21) or driven by both an electric motor and an internal combustion engine (20), said vehicle drive route instruction system comprising:

   an SOC amount acquiring unit (50) acquiring an SOC amount of a battery (3) which is a source of supply of electric power to the electric motor,
   a vehicle position detecting unit (51) detecting a current position of the vehicle,
   a zone judging unit (52) judging if currently the vehicle is driving through an inside of an engine drive restriction zone where driving by the internal combustion engine is restricted,
   an operation control unit (53) making the internal combustion engine stop operating and making the electric motor drive the vehicle when it is judged that currently the vehicle is driving through the engine drive restriction zone,

   the system being **characterized by** further comprising :

   a shortest route searching unit (54) searching for a shortest route from the current position to a boundary of an inside of the engine drive restriction zone and an outside of the engine drive restriction zone when it is judged that currently the vehicle is driving through the inside of the engine drive restriction zone,
   a decreased SOC amount calculating unit (55) calculating a decreased SOC amount when driving the vehicle through the searched shortest route from the current position to the boundary,
   an SOC amount judging unit (56) judging if the SOC amount will fall to a preset judgment standard based on the current SOC amount and the calculated decreased SOC amount when driving the vehicle through the searched shortest route from the current position to the boundary based, and
   a guidance device (11) giving information to an occupant of the vehicle to guide the vehicle from the current position through the searched shortest route to the boundary in case where it is judged that the SOC amount will fall to the judgment standard when driving the vehicle through the searched shortest route from the current position to the boundary.

2. The vehicle drive route instruction system according to claim 1 wherein the hybrid vehicle (1) is a vehicle which is selectively switched to either mode of a mode where the vehicle is driven by only the electric motor (21) and a mode where the vehicle is driven by both of the internal combustion engine (20) and electric motor or a vehicle which is driven by only the electric motor and the internal combustion engine is used only for driving a generator to charge the battery (3).

3. The vehicle drive route instruction system according to claim 1 wherein the judgment standard is set to a value larger than a preset lower limit value of the SOC amount by exactly a fixed value.

4. The vehicle drive route instruction system according to claim 1 wherein the SOC amount judging uni1 (56) judges that the SOC amount will fall to the preset judgment standard when driving the vehicle through the searched shortest route from the current position to the boundary by judging if the current SOC amount falls below a value of the judgment standard plus the calculated decreased SOC amount, and the guidance device (11) gives information to an occupant of the vehicle to guide the vehicle from the current position through the searched shortest route to the boundary when it is judged that the current SOC amount falls below the value of the judgment standard plus the calculated decreased SOC amount.

5. The vehicle drive route instruction system according to claim 1 wherein the guidance device (11) is provided with a display unit displaying a driving route of the vehicle, and the guidance device displays the searched shortest route at the display unit in case where it is judged by the SOC amount judging unit (56) that the SOC amount will fall to the judgment standard when driving the vehicle through the searched shortest route from the current position to the boundary.

6. The vehicle drive route instruction system according to claim 1 wherein the guidance device (11) is provided with a speech generating unit explaining a drive route of the vehicle by voice and the guidance device provides voice guidance of the searched shortest route in case where it is judged by the SOC amount judging unit (56) that the SOC amount will fall to the judgment standard when driving the vehicle through the searched shortest route from the current position to the boundary.

**Patentansprüche**

1. Fahrzeugfahrweg-Anleitungssystem in einem Hybridfahrzeug (1), das nur von einem Elektromotor (21) oder sowohl von einem Elektromotor als auch von einem Verbrennungsmotor (20) angetrieben wird, wobei das Fahrzeugfahrweg-Anleitungssystem umfasst:

   eine SOC-Mengenerfassungseinheit (50), die eine SOC-Menge einer Batterie (3) erfasst, die eine Quelle zur Versorgung des Elektromotors mit elektrischer Energie ist,
   eine Fahrzeugpositionserfassungseinheit (51), die eine aktuelle Position des Fahrzeugs erkennt,
   eine Zonenbeurteilungseinheit (52), die beurteilt, ob das Fahrzeug aktuell durch das Innere einer Motorantriebsbeschränkungszone fährt, in der das Fahren mit dem Verbrennungsmotor beschränkt ist,
   eine Betriebssteuereinheit (53), die das Betreiben des Verbrennungsmotors stoppt und den Elektromotor zum Antrieb des Fahrzeugs bringt, wenn beurteilt wird, dass das Fahrzeug aktuell durch die Motorantriebsbeschränkungszone fährt, wobei das System **dadurch gekennzeichnet ist, dass** es ferner umfasst:

   eine Sucheinheit (54) für den kürzesten Weg, die nach einem kürzesten Weg von der aktuellen Position zu einer Begrenzung einer Innenseite der Motorantriebsbeschränkungszone und einer Außenseite der Motorantriebsbeschränkungszone sucht, wenn beurteilt wird, dass das Fahrzeug aktuell durch die Innenseite der Motorantriebsbeschränkungszone fährt,
   eine Berechnungseinheit (55) für einen verringerten SOC-Betrag, die einen verringerten SOC-Betrag berechnet, wenn das Fahrzeug durch den gesuchten kürzesten Weg von der aktuellen Position zur Begrenzung fährt,
   eine SOC-Mengen-Beurteilungseinheit (56), die basierend auf der aktuellen SOC-Menge und der berechneten verringerten SOC-Menge beurteilt, ob die SOC-Menge auf einen voreingestellten Beurteilungsstandard fallen wird, wenn das Fahrzeug durch den gesuchten kürzesten Weg von der aktuellen Position zu der Begrenzung fährt, und
   eine Leitvorrichtung (11), die einem Fahrzeuginsassen Informationen gibt, um das Fahrzeug von der aktuellen Position über den gesuchten kürzesten Weg zur Begrenzung zu leiten, wenn beurteilt wird, dass die SOC-Menge auf den Beurteilungsstandard fallen wird, wenn das Fahrzeug über den gesuchten kürzesten Weg von der aktuellen Position zur Begrenzung fährt.

2. Fahrzeugfahrweg-Anleitungssystem nach Anspruch 1, wobei das Hybridfahrzeug (1) ein Fahrzeug ist, das wahlweise in einen Modus, in dem das Fahrzeug nur durch den Elektromotor (21) angetrieben wird, und einen Modus, in dem das Fahrzeug sowohl durch den Verbrennungsmotor (20) als auch durch den Elektromotor angetrieben wird, oder in einen Modus, in dem das Fahrzeug nur durch den Elektromotor angetrieben wird und der Verbrennungsmotor nur für den Antrieb eines Generators zum Laden der Batterie (3) verwendet wird, geschaltet wird.

3. Fahrzeugfahrweg-Anleitungssystem nach Anspruch 1, wobei der Beurteilungsstandard auf einen Wert eingestellt ist, der um genau einen festen Wert größer ist als ein voreingestellter unterer Grenzwert des SOC-Betrags.

4. Fahrzeugfahrweg-Anleitungssystem nach Anspruch 1, wobei die SOC-Mengen-Beurteilungseinheit (56) beurteilt, dass die SOC-Menge auf den voreingestellten Beurteilungsstandard fallen wird, wenn das Fahrzeug durch den gesuchten kürzesten Weg von der aktuellen Position zur Begrenzung fährt, indem sie beurteilt, ob die aktuelle SOC-Menge unter einen Wert des Beurteilungsstandards plus der berechneten verringerten SOC-Menge fällt, und die Leitvorrichtung (11) einem Insassen des Fahrzeugs Informationen gibt, um das Fahrzeug von der aktuellen Position durch den gesuchten kürzesten Weg zur Begrenzung zu leiten, wenn beurteilt wird, dass der aktuelle SOC-Wert unter den Wert des Beurteilungsstandards plus den berechneten verringerten SOC-Wert fällt.

5. Fahrzeugfahrweg-Anleitungssystem nach Anspruch 1, wobei die Leitvorrichtung (11) mit einer Anzeigeeinheit versehen ist, die einen Fahrweg des Fahrzeugs anzeigt, und die Leitvorrichtung den gesuchten kürzesten Weg an der Anzeigeeinheit anzeigt, wenn von der SOC-Mengen-Beurteilungseinheit (56) beurteilt wird, dass die SOC-Menge auf den Beurteilungsstandard fallen wird, wenn das Fahrzeug durch den gesuchten kürzesten Weg von der aktuellen Position zur Begrenzung fährt.

6. Fahrzeugfahrweg-Anleitungssystem nach Anspruch 1, wobei die Leitvorrichtung (11) mit einer Spracherzeugungseinheit versehen ist, die eine Fahrtroute des Fahrzeugs durch Sprache erklärt, und die Leitvorrichtung eine Sprachanleitung des gesuchten kürzesten Wegs bereitstellt, wenn durch die SOC-Mengenbeurteilungseinheit (56) beurteilt wird, dass die SOC-Menge auf den Beurteilungsstandard fallen wird, wenn das Fahrzeug durch den gesuchten kürzesten Weg von der aktuellen Position zur Begrenzung fährt.

## Revendications

1. Système d'instruction d'itinéraire de conduite de véhicule dans un véhicule hybride (1) entraîné uniquement par un moteur électrique (21) ou entraîné à la fois par un moteur électrique et un moteur à combustion interne (20), ledit système d'instruction d'itinéraire de conduite de véhicule comprenant :

une unité d'acquisition d'état de charge SOC (50) qui acquière un état de charge SOC d'une batterie (3) qui est une source d'alimentation en courant électrique du moteur électrique,
une unité de détection de position de véhicule (51) qui détecte une position courante du véhicule,
une unité d'estimation de zone (52) qui estime si le véhicule passe actuellement à l'intérieur d'une zone de restriction de motorisation dans laquelle la circulation de véhicules à moteur à combustion interne est restreinte,
une unité de commande des opérations (53) qui fait en sorte que le moteur à combustion interne cesse de fonctionner et que le moteur électrique entraîne le véhicule lorsqu'il est estimé que le véhicule passe actuellement à l'intérieur d'une zone de restriction de motorisation, le système étant **caractérisé par le fait qu'**il comprend en outre :

une unité de recherche d'itinéraire le plus court (54) qui recherche l'itinéraire le plus court entre la position actuelle et une frontière entre l'intérieur de la zone de restriction de motorisation et l'extérieur de la zone de restriction de motorisation lorsqu'il est estimé que le véhicule passe actuellement à l'intérieur d'une zone de restriction de motorisation,
une unité de calcul d'état de charge SOC réduit (55) qui calcule un état de charge SOC réduit lorsque le véhicule circule le long de l'itinéraire le plus court recherché entre la position actuelle et la frontière,
une unité d'estimation d'état de charge SOC (56) qui estime si l'état de charge SOC va tomber à un niveau d'estimation prédéfini sur la base de l'état de charge SOC actuel et de l'état de charge SOC réduit calculé lorsque le véhicule circule le long de l'itinéraire le plus court recherché entre la position actuelle et la frontière, et
un dispositif de guidage (11) qui donne des informations à un occupant du véhicule pour guider le véhicule de la position actuelle jusqu'à la frontière le long de l'itinéraire le plus court recherché, dans le cas où il est estimé que l'état de charge SOC va tomber au niveau d'estimation lorsque le véhicule circule le long de l'itinéraire le plus court recherché entre la position actuelle et la frontière.

2. Système d'instruction d'itinéraire de conduite de véhicule selon la revendication 1, dans lequel le véhicule hybride (1) est un véhicule qui est commuté sélectivement dans l'un ou l'autre d'un mode dans lequel le véhicule est entraîné uniquement par le moteur électrique (21) et d'un mode dans lequel le véhicule est entraîné à la fois par le moteur à combustion interne (20) et le moteur électrique, ou un véhicule qui est entraîné uniquement par le moteur électrique et dans lequel le moteur à combustion interne est utilisé uniquement pour entraîner un générateur afin de charger la batterie (3).

3. Système d'instruction d'itinéraire de conduite de véhicule selon la revendication 1, dans lequel le niveau d'estimation est fixé à une valeur supérieure à une valeur limite inférieure prédéfinie de l'état de charge SOC d'exactement une valeur fixe.

4. Système d'instruction d'itinéraire de conduite de véhicule selon la revendication 1, dans lequel l'unité d'estimation d'état de charge SOC (56) estime que l'état de charge SOC va tomber au niveau d'estimation prédéfini lorsque le véhicule circule le long de l'itinéraire le plus court recherché entre la position actuelle et la frontière en estimant si l'état de charge SOC actuel tombe en dessous d'une valeur du niveau d'estimation plus l'état de charge SOC réduit calculé, et le dispositif de guidage (11) donne des informations à un occupant du véhicule pour guider le véhicule de la position actuelle jusqu'à la frontière le long de l'itinéraire le plus court recherché, lorsqu'il est estimé que l'état de charge SOC tombe en-dessous de la valeur du niveau d'estimation plus l'état de charge SOC réduit calculé.

5. Système d'instruction d'itinéraire de conduite de véhicule selon la revendication 1, dans lequel le dispositif de guidage (11) est équipé d'une unité d'affichage qui affiche un itinéraire de conduite du véhicule, et le dispositif de guidage affiche l'itinéraire le plus court recherché sur l'unité d'affichage dans le cas où l'unité d'estimation d'état de charge SOC (56) estime que l'état de charge SOC va tomber au niveau d'estimation lorsque le véhicule circule le long de l'itinéraire le plus court recherché entre la position actuelle et la frontière.

6. Système d'instruction d'itinéraire de conduite de véhicule selon la revendication 1, dans lequel le dispositif de guidage (11) est équipé d'une unité de génération de discours expliquant vocalement un itinéraire de conduite du véhicule et le dispositif de guidage fournit un guidage vocal de l'itinéraire le plus court recherché dans le cas où il est estimé par l'unité d'estimation d'état de charge SOC (56) que l'état de charge SOC va tomber au niveau d'estimation lorsque le véhicule circule le long de l'itinéraire le plus court recherché entre la position actuelle et la frontière.

# FIG. 1

# FIG. 2A

# FIG. 2B

EP 3 974 228 B1

# FIG. 3

SOC |——————————|——————————|——————————|
    0%         SOCX        SOCY       100%

# FIG. 4

( CHARGING CONTROL )

READ ΔI ~30

SOC←SOC+C·ΔI ~31

32
SOC<SOCX ── NO ──→ 34
  │                SOC>SOCY ── NO ──┐
 YES                  │             │
  │                  YES ~35        │
  ▼                   ▼             │
POWER GENERATION   CANCEL POWER     │
COMMAND ~33        GENERATION COMMAND │
                        │ 36         │
                        ▼            │
                   STOP REGENERATIVE │
                   CONTROL           │
  │                     │            │
  ◄─────────────────────┴────────────┘
  ▼
( END )

16

# FIG. 5

# FIG. 6

# FIG. 7

FIG. 8

```
┌──────────────────┐                                    ┌──────────────────┐
│   SOC AMOUNT     │ 50                              55  │    DECREASED     │
│ ACQUIRING UNIT   │                                    │   SOC AMOUNT     │
└──────────────────┘                                    │ CALCULATING UNIT │
                    51                   54             └──────────────────┘ 56
┌──────────────────┐        ┌──────────────────┐        ┌──────────────────┐
│ VEHICLE POSITION │        │  SHORTEST ROUTE  │        │   SOC AMOUNT     │
│  DETECTING UNIT  │───────▶│   SEARCH UNIT    │        │  JUDGING UNIT    │
└──────────────────┘        └──────────────────┘        └──────────────────┘ 11
         │          52                          53                │
         ▼          ┌──────────────────┐        ┌──────────────────┐
┌──────────────────┐│    OPERATION     │        │   GUIDE DEVICE   │
│ ZONE JUDGING UNIT││  CONTROL UNIT    │        └──────────────────┘
└──────────────────┘└──────────────────┘
```

# FIG. 9

( VEHICLE CONTROL )

ACQUIRE POSITION INFORMATION ~100

READ BOUNDARY INFORMATION ~101

INSIDE
ENGINE DRIVE RESTRICTION
ZONE 102

NO → CANCEL ENGINE DRIVE STOP COMMAND ~110

DRIVE CONTROL IN EV MODE OR HV MODE ~111

YES

ENGINE DRIVE STOP COMMAND ~103

DRIVE CONTROL IN EV MODE ~104

SEARCH FOR ROUTES TO BOUNDARY ~105

SELECT SHORTEST ROUTE ~106

CALCULATE △SOC ~107

SOC<SOCZ+△SOC 108

YES

NO

GUIDE TO OUTSIDE ENGINE DRIVE RESTRICTION ZONE ~109

( END )

# FIG. 10

# FIG. 11

```
        ( SELF DRIVING CONTROL )
                    │
                   200
             ╱─────────────╲        NO
            ╱  DESTINATION  ╲─────────────────▶ ( 2 )
            ╲     SET       ╱
             ╲─────────────╱
                    │ YES
         ┌─────────────────────────┐
         │ ACQUIRE POSITION INFORMATION │──201
         └─────────────────────────┘
                    │
           ┌───────────────────┐
           │ DETERMINE TARGET ROUTE │──202
           └───────────────────┘
                    │
          ┌─────────────────────┐
          │ READ BOUNDARY INFORMATION │──203
          └─────────────────────┘
                    │
            ┌───────────────┐
            │ START DRIVING  │──204
            └───────────────┘
                    │
                   205
            ╱──────────────────╲        NO
           ╱      INSIDE         ╲────────────────────┐
           ╲ ENGINE DRIVE RESTRICTION ╱               │
            ╲      ZONE          ╱                     │
             ╲──────────────────╱                      │
                    │ YES                              │
   ┌──────────────────────┐         ┌──────────────────────┐
   │ ENGINE DRIVE STOP COMMAND │──206  │   CANCEL ENGINE        │──213
   └──────────────────────┘         │  DRIVE STOP COMMAND    │
                    │               └──────────────────────┘
                    │                          │
   ┌──────────────────────┐         ┌──────────────────────┐
   │  SELF DRIVING CONTROL  │──207  │  SELF DRIVING CONTROL  │──214
   │   ALONG TARGET ROUTE   │         │   ALONG TARGET ROUTE   │
   │      BY EV MODE        │         │  BY EV MODE OR HV MODE │
   └──────────────────────┘         └──────────────────────┘
                    │                          │
                  ( 1 )                      ( 2 )
```

# FIG. 12

①

| SEARCH FOR ROUTES TO BOUNDARY | ~208 |

| SELECT SHORTEST ROUTE | ~209 |

| CALCULATE $\triangle SOC$ | ~210 |

211

$SOC < SOCZ + \triangle SOC$

YES

NO

| CONVERT TARGET ROUTE TO ROUTE PASSING THROUGH SHORTEST ROUTE | ~212 |

②

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7075210 A
- US 8301323 B2

- US 20130158870 A1
- US 005815824 A